# EUROPÄISCHE PATENTANMELDUNG

(11) **EP 1 356 872 A2**
(43) Veröffentlichungstag der Anmeldung: **29.10.2003**
(21) Anmeldenummer: 03006581.7
(22) Anmeldetag: 24.03.2003
(51) Int. Cl.: B08B 15/02

(54) **Sicherheitswerkbank mit vereinfachter Bedienbarkeit**

(30) Priorität: 22.04.2002 DE 10217903
(71) Anmelder: KENDRO Laboratory Products GmbH, 63450 Hanau (DE)
(72) Erfinder: Ross, Gerd, 60388 Frankfurt (DE)
(74) Vertreter: Tomerius, Isabel, Dr.

(57) **Zusammenfassung**

Die Erfindung betrifft eine Sicherheitswerkbank (1) mit einem von einem Gehäuse (2) umschlossenen Innenraum (3) und einer Gehäusefrontseite (4), welche eine Arbeitsöffnung (5) aufweist, die von einer höhenverstellbaren Frontscheibe (6) verschließbar ist. Die Sicherheitswerkbank (1) weist eine fest in das Gehäuse (2) integrierte Bedieneinheit zum Steuern von Gerätefunktionen auf. Die Bedieneinheit umfasst wenigstens einen Wippentaster (7), dessen Tastenbelegung sich in Abhängigkeit vom Betriebszustand der Sicherheitswerkbank (1) derart ändert, dass in dem jeweiligen Betriebszustand durch Betätigung einer Taste des Wippentasters (7) eine bestimmte Gerätefunktion steuerbar ist.

## Beschreibung

Die Erfindung betrifft eine Sicherheitswerkbank, deren Gerätefunktionen auf besonders einfache Art und Weise gesteuert werden können.

Herkömmliche mikrobiologische Sicherheitswerkbänke verfügen üblicherweise über eine fest installierte Bedieneinheit, welche meist an der Gehäuseaußenseite befestigt ist. Eine derartige Sicherheitswerkbank ist beispielsweise in der DE 4441784 C2 der Anmelderin beschrieben. Die Bedieneinheit weist eine Vielzahl von Schaltern, Reglern oder Tasten auf, die jeweils dem Steuern einer bestimmten, fest vorgegebenen Gerätefunktion dienen. Beispielsweise dient ein Schalter zum Ein- und Ausschalten der Sicherheitswerkbank, ein weiterer Schalter zum Ein- und Ausschalten der Beleuchtung, ein weiterer separater Schalter zum Zu- und Ausschalten der Versorgungsspannung der Steckdosen usw. Eine derartige Bedieneinheit ist häufig vergleichsweise unübersichtlich und damit schwer zu bedienen. Außerdem ist ihre Herstellung relativ teuer.

Aufgabe der Erfindung ist es entsprechend, eine mikrobiologische Sicherheitswerkbank anzugeben, welche die Bedienung für den Benutzer vereinfacht und welche einfach und kostengünstig herstellbar ist.

Die Lösung dieser Aufgabe gelingt mit der Sicherheitswerkbank gemäß Anspruch 1. Bevorzugte Ausgestaltungen und Weiterbildung der Sicherheitswerkbank sind den Unteransprüchen zu entnehmen.

Die Erfindung betrifft also eine Sicherheitswerkbank mit einem von einem Gehäuse umschlossenen Innenraum und einer Gehäusefrontseite, welche eine Arbeitsöffnung aufweist, die von einer höhenverstellbaren Frontscheibe verschließbar ist. Die Sicherheitswerkbank weist eine fest in das Gehäuse integrierte Bedieneinheit zum Steuern von Gerätefunktionen auf, welche wenigstens einen Wippentaster umfasst, dessen Tastenbelegung sich in Abhängigkeit vom Betriebszustand der Sicherheitswerkbank derart ändert, dass in dem jeweiligen Betriebszustand durch Betätigung einer Taste des Wippentasters eine bestimmte Gerätefunktion steuerbar ist. Bevorzugt umfasst die Bedieneinheit nur einen Wippentaster und insbesondere einen Wippentaster mit einer Einfach- oder Doppelwippe. Vierfachwippen oder sonstige Arten von Wippentastern sind aber ebenfalls verwendbar.

Derartige Wippentaster sind im Stand der Technik grundsätzlich bekannt. Sie werden gelegentlich auch als "Pilot switches" bezeichnet. Unter einem Wippentaster mit Einfachwippe soll ein Taster verstanden werden, der lediglich in eine Richtung gedrückt werden kann. Üblicherweise weist er eine schräg nach unten vorspringende Taste auf, die beim Drücken den Wippentaster auf "an" stellt und beim Loslassen auf "aus" zurückspringt. Doppelwippen können dagegen in zwei Richtungen - nach oben und unten - betätigt werden, wobei die Tastenbelegung und die durch Betätigung entweder der oberen oder der unteren Taste gesteuerten Funktionen verschieden sein können. Ob die Belegung der oberen und der unteren Taste eines Doppelwippentasters (oder der verschiednen Tasten einer Mehrfachwippe) unterschiedlich ist, kann erfindungsgemäß auch in Abhängigkeit davon variieren, in welchem aktuellen Betriebszustand sich die Sicherheitswerkbank befindet.

Durch die erfindungsgemäße Verwendung der Wippentaster ist die Anzahl der vom Benutzer zu bedienenden Tasten oder Schalter auf ein Minimum reduziert. Die Bedienung der erfindungsgemäßen Bedieneinheit wird dadurch ausgesprochen einfach. Fehlbedienungen sind praktisch kaum mehr möglich. Durch die bereits durch die Sicherheitswerkbank selbst vorgegebene Tastenbelegung, die sich danach ausrichtet, welche Funktionen im gerade aktuellen Betriebszustand der Sicherheitswerkbank geregelt werden müssen, können die im aktuellen Zustand wichtigsten Vorgänge schnell und gezielt ausgeführt werden.

Grundsätzlich ist es möglich, alle Betriebsfunktionen einer Sicherheitswerkbank über einen oder mehrere Wippentaster zu regeln. Ebenso gut können jedoch einige der Betriebsfunktionen herkömmlichen Bedienelementen zugeordnet sein. In diesem Fall ist es jedoch bevorzugt, dass die für einen sicheren Betrieb der Werkbank notwendigen Funktionen über den oder die Wippentaster gesteuert werden, um eine schnelle und sichere Bedienung der erfindungsgemäßen Sicherheitswerkbank zu gewährleisten. Weniger wichtige Funktionen, die weiterhin mit herkömmlichen Bedienelementen wie Schaltern oder Reglern eingestellt werden können, sind insbesondere solche, die nur gelegentlich benötigt oder verändert werden, zum Beispiel die Uhrzeit, der Timer usw.

Wie erwähnt, ist die Tastenbelegung des wenigstens einen Wippentasters vorgegeben und richtet sich nach dem jeweiligen Betriebszustand der Sicherheitswerkbank. in welchem Betriebszustand die Sicherheitswerkbank sich gerade befindet, kann mit den an sich bekannten und üblicherweise in einer Sicherheitswerkbank vorhandenen Kontroll- und Rückkoppelungsvorrichtungen festgestellt werden, die beispielsweise an eine im Gerät integrierte Steuereinheit melden, ob die Werkbank ein- oder ausgeschaltet ist, Licht, Lüftung und Steckdosen des Geräts an- oder abgeschaltet sind, ein Störungszustand vorliegt oder nicht usw. Zweckmäßig ist das Steuerprogramm, welches definiert, welche Tastenbelegung der wenigstens eine Wippentaster für einen bestimmten Betriebszustand aufweisen soll, ebenfalls in der Steuereinheit der Sicherheitswerkbank abgespeichert und in die Steuersoftware der Sicherheitswerkbank integriert.

Die erfindungsgemäße Sicherheitswerkbank soll nachfolgend am Beispiel eines Bedienelements mit nur einem Wippentaster mit Einfach- oder Doppelwippe näher erläutert werden, ohne dass die Erfindung deshalb auf diese Ausführungsformen beschränkt wäre. Anstelle eines Wippentasters mit Doppelwippe können beispielsweise genau so gut zwei Wippentaster mit Einfachwippe verwendet werden. Wenn nicht anders erwähnt, haben die obere und untere Taste der Doppelwippe die gleiche Tastenbelegung.

Der Betriebszustand, in dem der Benutzer die Sicherheitswerkbank üblicherweise vor Beginn der Benutzung vorfindet, ist der Betriebszustand "Sicherheitswerkbank ausgeschaltet". Zweckmäßig ist die Tastenbelegung des Wippentasters so, dass das Betätigen des Wippentasters die Sicherheitswerkbank einschaltet und dadurch in einen anderen Betriebszustand versetzt. Mit dem Wechsel des Betriebszustandes ändert sich auch die Tastenbelegung des Wippentasters gemäß den in der Steuersoftware hinterlegten Vorgaben.

Um die Bedienung der Sicherheitswerkbank zu vereinfachen, können an das Einschalten der Sicherheitswerkbank weitere Vorgänge angekoppelt sein. Beispielsweise wird mit dem Einschalten wenigstens einer der folgenden Vorgänge ausgelöst: Einschalten der Lüftung, Einschalten der Beleuchtung, Einschalten der Versorgungsspannung für die integrierten Steckdosen und Verfahren der höhenverstellbaren Frontscheibe in Arbeitsposition. Auf diese Weise ist es möglich, die erfindungsgemäße Sicherheitswerkbank mit einem Betätigen des Wippentasters in den normalen Arbeitsbetriebszustand zu versetzen.

Alternativ ist es jedoch auch möglich, die genannten Vorgänge zumindest teilweise von Hand auszuführen, zweckmäßig jeweils durch Betätigen des Wippentasters, wodurch jedes Mal ein neuer Betriebszustand der Sicherheitswerkbank erreicht wird und sich die Tastenbelegung ändert. So kann nach dem Einschalten der Sicherheitswerkbank in beliebiger Reihenfolge eine Tastenbelegung zur Steuerung wenigstens eines der folgenden Vorgänge mittels Betätigen des Wippentasters durchlaufen werden: Einschalten der Lüftung, Einschalten der Beleuchtung, Einschalten der Versorgungsspannung für die integrierten Steckdosen und Verfahren der höhenverstellbaren Frontscheibe in Arbeitsposition. Pro Tastendruck können auch mehrere Vorgänge gleichzeitig ausgelöst werden. Auch im Anschluss an das manuelle "Hochfahren" der Sicherheitswerkbank befindet sich diese dann im normalen Arbeitsbetriebszustand, dem eine spezifische Tastenbelegung des oder der Wippentaster zugewiesen ist.

Zweckmäßig ist die Tastenbelegung im Arbeitszustand der Sicherheitswerkbank derart, dass durch Betätigen des Wippentasters das Verfahren der höhenverstellbaren Frontscheibe gesteuert wird. Dies ist die Funktion, die während des normalen Betriebs der Sicherheitswerkbank am häufigsten benötigt wird. Bei Verwendung eines einzigen Einfachwippentasters kann die Bewegung der Frontscheibe dabei so geregelt sein, dass die Scheibe sich in Abhängigkeit ihrer momentanen Position entweder nach oben oder nach unten bewegt. Befindet sich die Frontscheibe beispielsweise in einem weitgehend geöffneten Zustand verfährt sie zweckmäßig zunächst nach unten. In der geschlossenen Position angekommen, kann sich dann die Bewegungsrichtung umkehren, so dass die Scheibe nach oben gefahren wird. Die Tastenbelegung kann so programmiert sein, dass die Scheibe verfahren wird, bis der Wippentaster erneut gedrückt wird, oder es wird nur so lange verfahren, wie die Taste gedrückt gehalten wird.

Bei einer Doppelwippe kann die Bewegungsrichtung mit der entsprechenden Taste variieren. Zweckmäßig führt ein Betätigen der oberen Taste zur Aufwärtsbewegung der Frontscheibe, die untere Wippentaste fährt die Scheibe herunter.

Wird im Betrieb der Sicherheitswerkbank eine Betriebsstörung festgestellt und/oder ein Alarm ausgelöst, bewirkt dies vorzugsweise, dass dadurch die Sicherheitswerkbank in einen neuen Betriebszustand versetzt wird. In diesem Störungszustand ändert sich auch die Tastenbelegung und zwar zweckmäßig derart, dass durch Betätigung des Wippentasters eine Fehlbetriebsmeldung bzw. der Alarm quittiert wird.

Um die Sicherheitswerkbank aus dem normalen Betriebszustand in den "Gerät ausgeschaltet"-Zustand zu versetzen, ist die Tastenbelegung im Arbeitszustand der Sicherheitswerkbank zweckmäßig derart, dass die Sicherheitswerkbank ausgeschaltet wird, wenn der Wippentaster nach dem Verfahren der Frontscheibe in eine vollständig geöffnete oder vollständige geschlossene Position weiter betätigt wird. Beispielsweise bewegt man also bei einer Doppelwippe die untere Wippentaste so lange nach unten, bis die Fronscheibe vollständig geschlossen ist, und hält die Taste danach weiter gedrückt, bis sich die Sicherheitswerkbank abgeschaltet hat. Damit sicher unterschieden werden kann, ob tatsächlich ein Abschalten der Sicherheitswerkbank gewünscht ist oder eine andere Funktion angesteuert werden sollte, kann vorgesehen sein, dass der Wippentaster zum Abschalten eine bestimmte, verlängerte Zeit lang gedrückt gehalten werden muss. Gleiches kann für das Einschalten der Sicherheitswerkbank vorgesehen sein.

Der oder die Wippentaster sind zweckmäßig an einer leicht erreichbaren Stelle der Sicherheitswerkbank angeordnet und zum Beispiel in die Gehäusefrontseite und/oder in den Innenraum integriert. Sind Wippentaster sowohl im Innenraum als auch am Außengehäuse vorhanden, ist ihre Tastenbelegung zweckmäßig gleich, aber auch abweichende Tastenbelegungen sind denkbar.

Um erkennen zu können, welche Bedienfunktionen mit dem Wippentaster zu einer bestimmten Zeit gesteuert werden können, weist die Sicherheitswerkbank zweckmäßig ein Anzeigeelement auf, welches den aktuellen Betriebszustand der Sicherheitswerkbank und/oder die jeweilige Tastenbelegung des Wippentasters anzeigt. Das Anzeigeelement befindet sich vorzugsweise in unmittelbarer Nähe des Wippentasters. Es kann weitere Anzeigefunktionen haben und zum Beispiel zusätzlich Warnmeldungen, Uhrzeit, Datum oder ähnliches anzeigen. Das Anzeigeelement kann grundsätzlich den bereits für herkömmliche Sicherheitswerkbänke verwendeten Anzeigeelementen entsprechen. Beispielsweise kann es sich um ein LCD- oder LED-Display handeln.

Besonders geeignet ist die Bedienung mittels Wippentaster für eine Kombination mit einer Fernbedienung zum Steuern der Gerätefunktionen. Während die Bedieneinheit mit Wippentaster beispielsweise zum Steuern der betriebsnotwendigen Funktionen dient, können weniger wesentliche Funktionen auf die Fernbedienung verlegt werden. Eine zusätzliche Steuerung der betriebsnotwendigen Funktionen durch die Fernbedienung ist selbstverständlich ebenfalls möglich. In diesem Fall ist es jedoch zweckmäßig, dass vom Wippentaster gesendete Steuersignale eine höhere Priorität als von der Fernbedienung gesendete Steuersignale besitzen. Damit ist sichergestellt, dass bei Fehlfunktionen der Fernbedienung der Betrieb der Sicherheitswerkbank weiterhin möglich ist.

Die Erfindung soll nachfolgend anhand einer Zeichnung näher erläutert werden. Darin zeigen schematisch:
- Fig. 1: eine erfindungsgemäße Sicherheitswerkbank in perspektivischer Darstellung,
- Fig. 2: ein Flussdiagramm, das eine mögliche Tastenbelegung verdeutlicht, und
- Fig. 3: ein weiteres Flussdiagramm, das eine andere mögliche Tastenbelegung veranschaulicht.

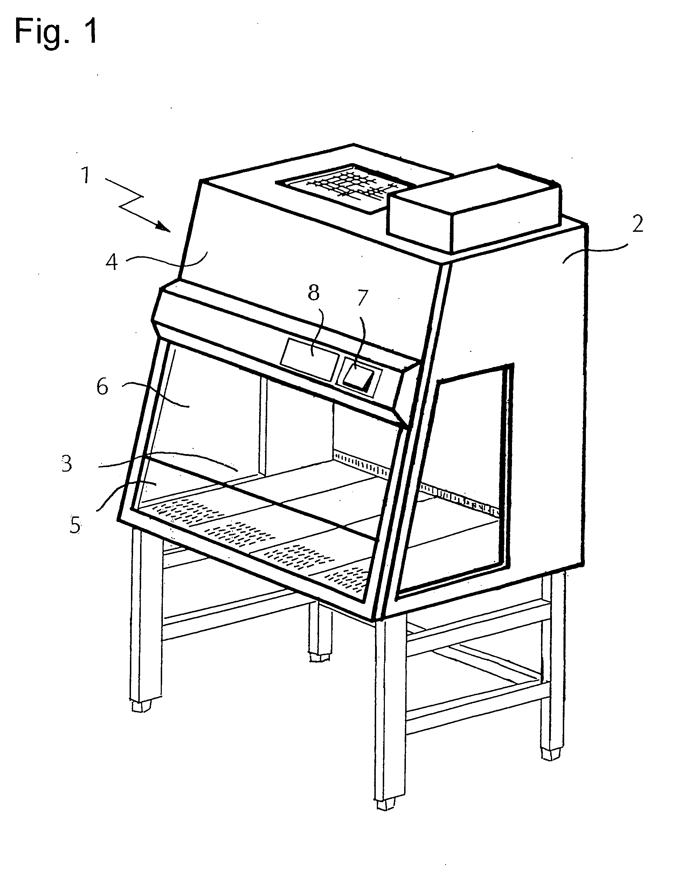

Im einzelnen zeigt Figur 1 eine erfindungsgemäße Sicherheitswerkbank 1 mit einem Innenraum 3, welcher von einem Gehäuse 2 umschlossen wird. Eine Arbeitsöffnung 5 in der Gehäusefrontseite 4 ermöglicht den Zugang zum Innenraum 3 und wird von einer höhenverstellbaren Frontscheibe 6 verschlossen. Die Sicherheitswerkbank 1 entspricht grundsätzlich einer herkömmlichen Sicherheitswerkbank, wie sie beispielsweise in der DE 4441784 C2 beschrieben wird und weist ein Lüftungssystem auf, welches ebenfalls grundsätzlich dem Stand der Technik entspricht. Die Art der Bedienung unterscheidet sich jedoch bei der erfindungsgemäßen Sicherheitswerkbank von derjenigen herkömmlicher Werkbänke.

Zur Bedienung der Sicherheitswerkbank 1 dient erfindungsgemäß ein Wippentaster 7, der an der Gehäusefrontseite 4 angebracht ist. Der Wippentaster 7 ist hier als Einfachwippe ausgebildet. Die einzige Wipptaste wird durch Drücken nach unten betätigt und löst dabei einen bestimmten Vorgang aus, der sich nach dem jeweiligen Betriebszustand richtet, in dem sich die Sicherheitswerkbank 1 gerade befindet. Tastenbelegung und/oder Betriebszustand werden dem Benutzer mit Hilfe des Displays 8 angezeigt.

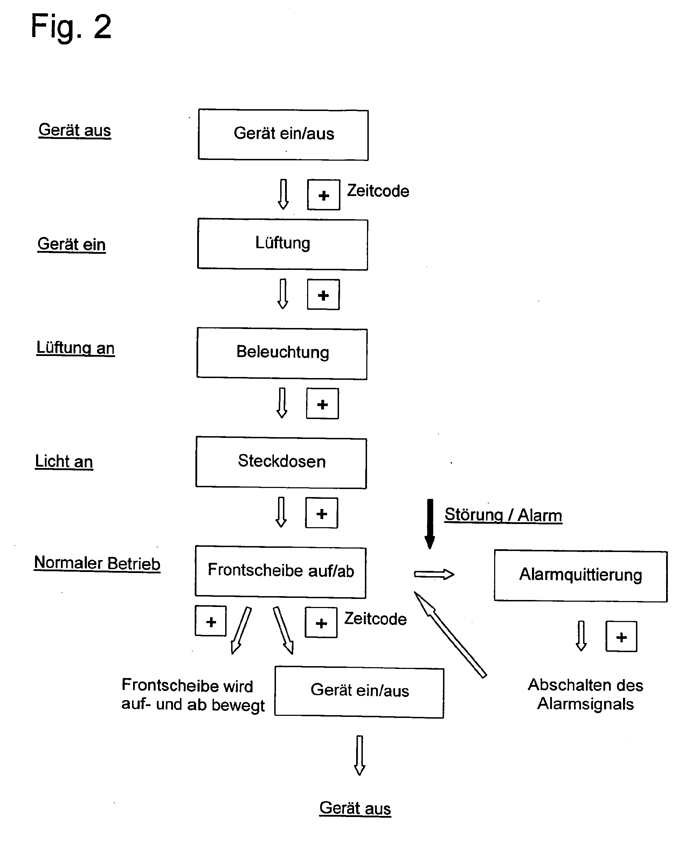

Eine mögliche Tastenbelegung in Abhängigkeit des Betriebszustands der Sicherheitswerkbank 1 ist schematisch in Fig. 2 dargestellt. Der jeweilige Betriebszustand ist unterstrichen. In den Blöcken ist die Funktion angegeben, die durch Betätigen des Wippentasters 7 eingestellt wird. Die Betätigung des Wippentasters 7 soll durch die mit "+" gekennzeichneten Kästen wiedergegeben werden.

Zunächst befindet sich die Sicherheitswerkbank 1 in ausgeschaltetem Zustand. Licht und Lüftung laufen nicht, die (nicht dargestellten) Steckdosen der Sicherheitswerkbank 1 sind nicht mit Strom versorgt, die Alarmüberwachung ist nicht aktiv. Der Display 8 zeigt entweder gar keine Meldung oder "OFF" oder die Uhrzeit oder Ähnliches, dem der Benutzer entnehmen kann, dass das Gerät nicht betriebsbereit ist.
Durch Betätigen des Wippentasters 7 mit einem für das Ein- und Ausschalten vorgesehenen verlängerten Tastendruck ("Zeitcode") schaltet sich die Sicherheitswerkbank zunächst ein. Im eingeschalteten Zustand ändert sich die Tastenbelegung, und es kann nun die Belüftung zugeschaltet werden. Im Modus "Lüftung an" schaltet sich auf weiteren Druck des Wippentasters 7 die Beleuchtung ein. Im nun erreichten Modus können durch Betätigung des Wippentasters 7 die Steckdosen mit Versorgungsspannung versorgt werden. Nun befindet sich die Sicherheitswerkbank 1 im normalen Betriebszustand.

Bei einem Wippentaster mit Doppelwippe (nicht dargestellt) kann die gleiche Schaltreihenfolge hinterlegt sein, wobei obere und untere Taste die gleiche Reaktion auslösen. Es ist aber auch möglich, beispielsweise die obere Taste so zu belegen, dass der erreichte Bedienungsmenüpunkt übersprungen wird. Zweckmäßig ist ein Überspringen aber nur möglich, wenn es sich bei der angesteuerten Funktion um eine solche handelt, die für den sicheren Betrieb der Sicherheitswerkbank 1 nicht wesentlich ist - wie das Zuschalten der Steckdosen.

Im normalen Betriebsmodus der Sicherheitswerkbank 1 dient der Wippentaster 7 zum Auf- und Abbewegen der Frontscheibe 6. Bei Verwendung des dargestellten Einfachwippentasters kann die Bewegung der Frontscheibe dabei so geregelt sein, dass die Scheibe sich in Abhängigkeit ihrer momentanen Position entweder nach oben oder nach unten bewegt. Befindet sich die Frontscheibe beispielsweise in einem weitgehend geöffneten Zustand, verfährt sie zweckmäßig zunächst nach unten. In der geschlossenen Position angekommen, kann sich dann die Bewegungsrichtung umkehren, so dass die Scheibe nach oben gefahren wird. Es ist aber gleichfalls möglich, die Frontscheibe zu Beginn immer entweder nach oben oder nach unten zu fahren. Eine Richtungsänderung wird dann durch "Überfahren der Extrempositionen" erreicht. Die Tastenbelegung kann so programmiert sein, dass die Scheibe verfahren wird, bis der Wippentaster erneut gedrückt wird, oder es wird nur so lange verfahren, wie die Taste gedrückt gehalten wird.

Wird im Betrieb der Sicherheitswerkbank eine Betriebsstörung festgestellt, gibt die Gerätesteuerung gegebenenfalls eine Alarmmeldung aus (zum Beispiel in Form einer Displayanzeige und/oder eines akustischen Alarms), und im Betriebszustand der Sicherheitswerkbank 1 tritt eine Änderung ein. Die Sicherheitswerkbank 1 befindet sich nun in einem Störungszustand. Damit ändert sich auch die Tastenbelegung. Eine Bewegung der Frontscheibe 6 mit dem Wippentaster 7 ist nun nicht mehr möglich. Statt dessen muss zunächst durch Betätigen des Wippentasters die Fehlbetriebsmeldung bzw. der Alarm quittiert werden, bevor die Sicherheitswerkbank 1 in den Normalbetriebszustand zurückkehrt. Damit ändert sich die Tastenbelegung wieder auf "Frontscheibe auf/ab".

Die Sicherheitswerkbank kann durch Betätigen des Wippentasters 7 auch aus dem normalen Betriebszustand in den "Gerät aus"-Zustand versetzt werden. In welcher Weise dies geschieht, hängt von der Art der Ansteuerung der Frontscheibe durch den Wippentaster 7 ab. Wird beispielsweise das Verfahren der Frontscheibe 6 durch einen kurzen Druck auf den Wippentaster ausgelöst und durch nochmaligen Druck gestoppt, kann die Funktion "Gerät aus" über die Länge des Tastendrucks vom Befehl "Frontscheibe auf/ab" unterschieden werden. Eine verlängerte Betätigung des Wippentasters 7 (Zeitcode) schaltet die Sicherheitswerkbank1 ab.

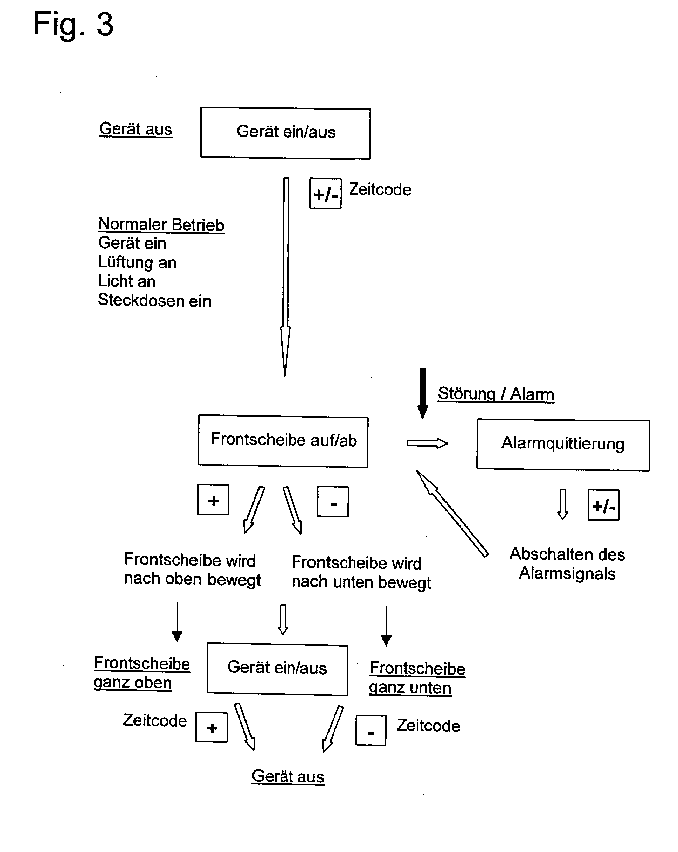

Fig. 3 zeigt ein anderes Schaltschema, in welchem ein Wippentaster mit Doppelwippe (nicht dargestellt) verwendet wird. Die Doppelwippe kann in zwei Richtungen geschaltet werden, nämlich nach oben (verdeutlicht durch "+") oder nach unten ("-" im Kasten). Die Bezeichnung eines Kastens mit "+/-" zeigt an, dass obere und untere Taste die gleiche Belegung haben, also sowohl ein Druck der oberen als auch der unteren Taste den selben Vorgang auslösen. Ansonsten haben die Bezeichnungen die gleiche Bedeutung wie in Fig. 2.

Im Unterschied zum Schaltschema der Fig. 2 löst hier die Betätigung des Wippentasters 7 im ausgeschalteten Zustand der Sicherheitswerkbank 1 mehrere Vorgänge aus. Das Gerät wird eingeschaltet, die Lüftung und die Beleuchtung werden in Betrieb gesetzt, und die Steckdosen werden mit Strom versorgt. Die Sicherheitswerkbank 1 wird also durch einmaliges Betätigen des Wippentasters 7 in den normalen Arbeitsbetriebszustand versetzt. Diese vereinfachte Inbetriebnahme ist im Übrigen auch für Wippentaster mit Einfachwippe anwendbar.

Wie schon im vorstehend geschilderten Fall steuert der Wippentaster 7 in diesem normalen Betriebszustand die Höhenverstellung der Frontscheibe 6. In diesem Zustand unterscheidet sich jedoch die Belegung der oberen und unteren Taste des Wippentasters 7. Ein Betätigen der oberen Taste führt zur Aufwärtsbewegung der Frontscheibe, die untere Wippentaste fährt die Scheibe herunter. Die Bewegung der Frontscheibe wird so lange fortgesetzt, wie die entsprechende Taste gedrückt gehalten wird. Die unterschiedlichen Tastenbelegungen werden dem Benutzer im Display 8 angezeigt. Zusätzlich können weitere Geräteparameter oder sonstige Informationen angezeigt werden, beispielsweise die Position der Frontscheibe, die Einstellung der Lüftung oder Ähnliches.

Betriebsstörungen werden auf die gleiche Weise gehandhabt wie in der Ausführungsform gemäß Fig. 2.

Das Ausschalten der Sicherheitswerkbank 1 aus dem normalen Betriebszustand in den ausgeschalteten Zustand kann entweder mit der oberen oder der unteren Taste des Wippentasters 7 erfolgen. Das Ausschalten ist entweder in einem Zustand mit vollständig geöffneter oder mit vollständig geschlossener Frontscheibe 6 möglich. Die Sicherheitswerkbank wird ausgeschaltet, wenn der Wippentaster nach dem Verfahren der Frontscheibe in eine vollständig geöffnete oder vollständig geschlossene Position weiter betätigt wird. Beispielsweise bewegt man also bei einer Doppelwippe die untere Wippentaste so lange nach unten, bis die Fronscheibe vollständig geschlossen ist, und hält die Taste danach weiter gedrückt, bis sich die Sicherheitswerkbank abgeschaltet hat. Die Zeitcode-Programmierung, nach der der Wippentaster zum Abschalten eine bestimmte, verlängerte Zeit lang gedrückt gehalten werden muss, stellt sicher, dass die Sicherheitswerkbank nicht unbeabsichtigt ausgeschaltet wird.

## Patentansprüche

1. Sicherheitswerkbank (1) mit einem von einem Gehäuse (2) umschlossenen Innenraum (3) und einer Gehäusefrontseite (4), welche eine Arbeitsöffnung (5) aufweist, die mit einer höhenverstellbaren Frontscheibe (6) verschließbar ist, sowie einer in das Gehäuse (2) integrierten Bedieneinheit zum Steuern von Gerätefunktionen,
**dadurch gekennzeichnet,**
**dass** die Bedieneinheit wenigstens einen Wippentaster (7) umfasst, dessen Tastenbelegung sich in Abhängigkeit vom Betriebszustand der Sicherheitswerkbank (1) derart ändert, dass in dem jeweiligen Betriebszustand durch Betätigung einer Taste des Wippentasters (7) eine bestimmte Gerätefunktion steuerbar ist.

2. Sicherheitswerkbank gemäß Anspruch 1,
**dadurch gekennzeichnet,**
**dass** die Bedieneinheit nur einen Wippentaster (7) und insbesondere einen Wippentaster (7) mit einer Einfach- oder Doppelwippe aufweist.

3. Sicherheitswerkbank gemäß Anspruch 1 oder 2,
**dadurch gekennzeichnet,**
**dass** zur Einstellung der Tastenbelegung ein Steuerprogramm in die Steuersoftware der Sicherheitswerkbank (1) integriert ist.

4. Sicherheitswerkbank gemäß einem der Ansprüche 1 bis 3,
**dadurch gekennzeichnet,**
**dass** im Betriebszustand "Sicherheitswerkbank ausgeschaltet" eine derartige Tastenbelegung des Wippentasters (7) vorgesehen ist, dass das Betätigen des Wippentasters (7) die Sicherheitswerkbank einschaltet und dadurch in einen anderen Betriebszustand versetzt.

5. Sicherheitswerkbank gemäß einem der Ansprüche 1 bis 4,
**dadurch gekennzeichnet,**
**dass** mit dem Einschalten der Sicherheitswerkbank (1) wenigstens einer der folgenden Vorgänge ausgelöst wird:
- Einschalten der Lüftung
- Einschalten der Beleuchtung
- Einschalten der Versorgungsspannung für die integrierten Steckdosen
- Verfahren der höhenverstellbaren Frontscheibe in Arbeitsposition.

6. Sicherheitswerkbank gemäß einem der Ansprüche 1 bis 4,
**dadurch gekennzeichnet,**
**dass** nach dem Einschalten der Sicherheitswerkbank (1) in beliebiger Reihenfolge eine Tastenbelegung zur Steuerung wenigstens eines der folgenden Vorgänge mittels Betätigen des Wippentasters (7) durchlaufen wird:
- Einschalten der Lüftung
- Einschalten der Beleuchtung
- Einschalten der Versorgungsspannung für die integrierten Steckdosen
- Verfahren der höhenverstellbaren Frontscheibe in Arbeitsposition.

7. Sicherheitswerkbank gemäß einem der Ansprüche 1 bis 6,
**dadurch gekennzeichnet,**
**dass** die Tastenbelegung im Arbeitszustand der Sicherheitswerkbank (1) derart ist, dass durch Betätigen des Wippentasters (7) das Verfahren der höhenverstellbaren Frontscheibe (6) gesteuert wird.

8. Sicherheitswerkbank gemäß einem der Ansprüche 1 bis 7,
**dadurch gekennzeichnet,**
**dass** bei Feststellen einer Betriebsstörung und/oder beim Auslösen eines Alarms die Tastenbelegung derart geändert wird, dass durch Betätigung des Wippentasters (7) eine Fehlbetriebsmeldung bzw. der Alarm quittiert wird.

9. Sicherheitswerkbank gemäß einem der Ansprüche 7 oder 8,
**dadurch gekennzeichnet,**
**dass** die Tastenbelegung im Arbeitszustand der Sicherheitswerkbank (1) derart ist, dass die Sicherheitswerkbank (1) ausgeschaltet wird, wenn der Wippentaster (7) nach dem Verfahren der Frontscheibe (6) in eine vollständig geöffnete oder vollständige geschlossene Position weiter betätigt wird.

10. Sicherheitswerkbank gemäß einem der Ansprüche 1 bis 9,
**dadurch gekennzeichnet,**
**dass** zum Ein- und/oder Ausschalten der Sicherheitswerkbank (1) eine vorgegebene Betätigungsdauer des Wippentasters erforderlich ist.

11. Sicherheitswerkbank gemäß einem der Ansprüche 1 bis 10,
**dadurch gekennzeichnet,**
**dass** der Wippentaster (7) in die Gehäusefrontseite (4) und/oder in den Innenraum (3) integriert ist.

12. Sicherheitswerkbank gemäß einem der Ansprüche 1 bis 11,
**dadurch gekennzeichnet,**
**dass** sie ein Anzeigeelement (8) aufweist, welches den aktuellen Betriebszustand der Sicherheitswerkbank (1) und/oder die jeweilige Tastenbelegung des Wippentasters (7) anzeigt.

13. Sicherheitswerkbank gemäß einem der Ansprüche 1 bis 12,
**dadurch gekennzeichnet,**
**dass** sie eine Fernbedienung zum Steuern der Gerätefunktionen umfasst.

14. Sicherheitswerkbank gemäß Anspruch 13,
**dadurch gekennzeichnet,**
**dass** vom Wippentaster (7) gesendete Steuersignale eine höhere Priorität als von der Fernbedienung gesendete Steuersignale besitzen.
